# EUROPEAN PATENT SPECIFICATION

(11) **EP 1 987 561 B1**
(45) Date of publication and mention of the grant of the patent: **14.09.2011**
(21) Application number: 07708831.8
(22) Date of filing: 08.02.2007
(51) Int. Cl.: H01M 16/00

(54) **HYBRID BATTERY**
HYBRIDBATTERIE
BATTERIE HYBRIDE

(30) Priority: 24.02.2006 KR 20060018200
(43) Date of publication of application: 05.11.2008
(73) Proprietor: Vitzrocell Co., Ltd., Chungcheongnam-do 340-861 (KR)
(72) Inventor: CHUNG, Se-Il, Asan, Chungcheongnam-do 336-755 (KR); KIM, Sung-Woo, Cheonan, Chungcheongnam-do 330-796 (KR)
(74) Representative: Kuhnen & Wacker
(86) International application number: PCT/KR2007/000681
(87) International publication number: WO 2007/097534

(56) References cited:
- EP-A2- 1 347 531
- WO-A1-2005/027255
- US-A- 5 587 250
- US-A- 5 670 266
- US-A- 6 117 585
- US-A1- 2006 263 649

## Description

### [Technical Field]

The present invention relates to a high power hybrid battery capable of discharging a transient high current pulse, and more particularly, to a high power hybrid battery having characteristics of a high current pulse discharge and a long life by hybridizing a high power electric double layer capacitor having a large area with a lithium primary battery in parallel.

### [Background Art]

WO 2005/027255 A1 discloses high performance energy strage device, including batteries such as leadacid batteries and other battery type, as well as capacitor electrodes and asymmetric capacitors.

Further, US 2006/0263649 A1 discloses an electrode assembly having a super-capacitor for allowing high-rate charge/discharge operations and a lithium secondary battery having the same.

Moreover, EP 1347531 A2 discloses a battery pack that can be suitable used for a portable terminal device such as a portable cellular phone being carried by for example a user who is on the road over an extended period of time.

Recently, as a wireless communication has remarkably grown, mobile instruments and equipments have changed from an analog type to a digital type and functions thereof have become increasingly complicated. In response to this trend, the wireless mobile communication instruments require characteristics such as a high power, a lightweight and slim design, and an inexpensive unit cost, and particularly, a transient high current pulse flows therein to transmit data wirelessly. The global system for mobile communication (GSM) requires a high current pulse of approximately 2 A, approximately 500 µs.

The auto meter reading (AMR) system typically requires a transient high current pulse characteristic by a wireless communication besides mobile instruments. The AMR system has been able to read a meter wirelessly as meters such as a water meter have changed to a digital type. A power source applied to the AMR system should have high power and long life characteristics corresponding to a high current pulse, same as the wireless mobile communication instruments. Also, since the AMR system is usually installed outdoors unlike the mobile instruments, it is very important to obtain the characteristics in a wide temperature range.

### Disclosure of Invention

### Technical Problem

In a conventional single battery system that is a power source for the mobile instruments or the AMR system having a high current pulse characteristic, a self-resistance due to a high current discharge generates a voltage drop, thereby decreasing a power voltage, and there is a limit of life due to a high current discharge. This greatly increases the cost of replacing a battery.

For this reason, an auxiliary power source for a transient high power is coming into the limelight while using a battery as a main power source. When the auxiliary power source for a transient high power is hybridized with a battery serving as a main power source in a parallel, a little load is applied to the battery. Accordingly, a life of the battery extremely increases and miniaturization of the battery is realized, reducing the unit cost.

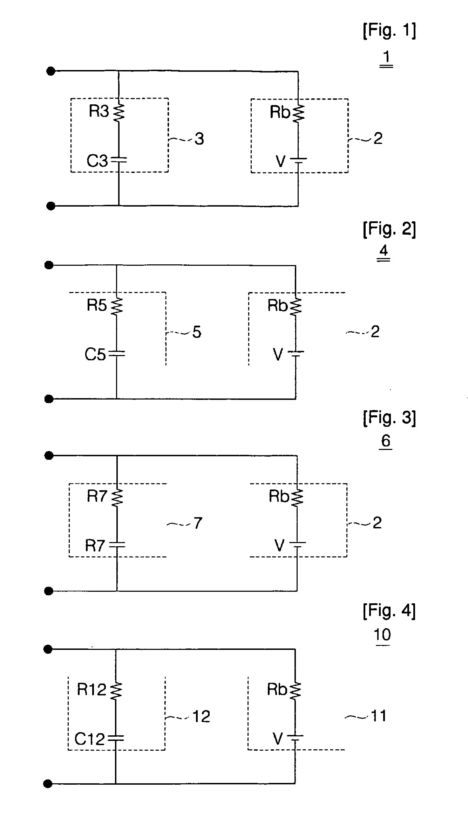

FIG. 1 is a circuit diagram of a hybrid battery according to a related art 1.

Referring to FIG. 1, a hybrid battery 1 includes a primary battery 2 and a winding type condenser 3 connected in parallel to the primary battery 2 and operating as an auxiliary power source. The winding type condenser 3 includes an electrode structure formed of a metal plate, and has a very low energy density as compared with an electric double layer capacitor (EDLC) including an activated carbon electrode.

Here, the primary battery 2 has a terminal voltage V and a self resistance R_{b}, and the winding type condenser 3 has an capacitance C and a self resistance R₃. Since the self resistance R₃ of the winding type condenser 3 is smaller than the self resistance R_{b} of the primary battery 2, the hybrid battery 1 is more advantageous to the high current pulse than the use of only the primary battery 2. However, the capacitance C₃ of the winding type condenser 3 is lower than several hundreds of □, and thus has a limit to use for the AMR system with a pulse time of several tens of msec.

FIG. 2 is a circuit diagram of a hybrid battery according to a related art 2.

Referring to FIG. 2, a hybrid battery 4 includes a primary battery 2 and a coin type electric double layer capacitor 5 used as an auxiliary power source and connected in parallel to the primary battery 2.

A capacitance C₅ of the coin type electric double layer capacitor 5 is several hundreds of mF several hundreds times larger than that of the winding type condenser 3 of FIG. 1, and thus is sufficient for pulse. However, the coin type electric double layer capacitor 5 has an small electrode region because limited by the size of a cell, and a large quantity of electric charges cannot transfer simultaneously in such a structure. Therefore, the coin type electric double layer capacitor 5 has a very large self resistance R₅, several tens of Ω, which is disadvantageous to a high current pulse discharge.

FIG. 3 is a circuit diagram of a hybrid battery according to a related art 3.

Referring to FIG. 3, a hybrid battery 6 includes a primary battery 2 and a high power secondary battery 7 used as an auxiliary power source.

A capacitance C₇ of the high power secondary battery 7 is several hundreds times larger than the capacitance C₅ of the coin type electric double layer capacitor 5. In addition, a self resistance R₇ of the secondary battery 7 has a high power characteristic corresponding to several hundreds of mΩ by a thin film design for an electrode. Thus, the hybrid battery 6 is an improved system, compared with the hybrid batteries 1 and 4 illustrated in FIGS. 1 and 2. However, while the secondary battery has an excellent capacitance characteristic in a chemical reaction, the secondary battery may not normally operate during a small time less than several hundreds of msec, thereby rapidly decreasing its capacitance. In particular, the secondary battery cannot operate at -40°C, a temperature condition for using the AMR system installed outdoors, and thus has a limit in its application.

### Technical Solution

An object of the present invention is to provide a hybrid battery that satisfies various pulse conditions in a wide temperature range including -40°C by using a primary battery including a primary battery as a main power source and a high power electric double layer capacitor as an auxiliary power source as defined in claim 1.

### Advantageous Effects

A hybrid battery according to the present invention includes a primary battery as a main power source and a high power electric double layer capacitor as an auxiliary power source, and can be used for various wireless communication equipments such as a global system for mobile communication and an auto meter reading system. Here, since a current consumption can be greatly decreased and a rated voltage can be output, the hybrid battery can supply power stably for a long time and can be used in a wide temperature range.

### Brief Description of the Drawings

FIG. 1 is a circuit diagram of a hybrid battery according to a related art 1;
FIG. 2 is a circuit diagram of a hybrid battery according to a related art 2;
FIG. 3 is a circuit diagram of a hybrid battery according to a related art 3;
FIG. 4 is a circuit diagram of a hybrid battery according to an embodiment of the present invention;
FIG. 5 is a view illustrating a structure of a stacked type electric double layer capacitor applied to an embodiment of the present invention;
FIG. 6 is a view illustrating a structure of a winding type electric double layer capacitor applied to an embodiment of the present invention;
FIG. 7 is a graph showing voltage drop characteristics of comparative examples 1-3, and an embodiment in Experiment 1 for illustrating an effect of the present invention;
FIG. 8 is a graph showing current consumption of a primary battery of comparative examples 1-3, and an embodiment in Experiment 1 for illustrating an effect of the present invention;
FIG. 9 is a graph showing voltage drop characteristics of comparative examples 1-3, and an embodiment in Experiment 2 for illustrating an effect of the present invention;
FIG. 10 is a graph showing current consumption of a primary battery of comparative examples 1-3, and an embodiment in Experiment 2 for illustrating an effect of the present invention;
FIG. 11 is a graph showing voltage drop characteristics of comparative examples 1-3, and an embodiment in Experiment 3 for illustrating an effect of the present invention;
FIG. 12 is a graph showing current consumption of a primary battery of comparative examples 1-3, and an embodiment in Experiment 3 for illustrating an effect of the present invention;
FIG. 13 is a graph showing voltage drop characteristics of comparative examples 1-3, and an embodiment in Experiment 4 for illustrating an effect of the present invention; and
FIG. 14 is a graph showing current consumption of a primary battery of comparative examples 1-3, and an embodiment in Experiment 4 for illustrating an effect of the present invention.

### Best Mode for Carrying Out the Invention

To accomplish the above object and advantages, there is provided, a hybrid battery including a main power source and an auxiliary power source connected in parallel to the main power source, the hybrid battery including an electric double layer capacitor including an activated carbon electrode as the auxiliary power source.

The main power source may be a lithium thionyl battery as a primary battery.

The activated carbon electrode may include an active material layer with a thickness of 10-40 µm.

The activated carbon electrode may include 25-50 % by weight of conductive material based on the total solid content.

The electric double layer capacitor may be a stacked type or a winding type.

The auxiliary power source may be a plurality of electric double layer capacitors coupled to each other.

Now, preferred embodiments of the present invention will be described in detail with reference to the accompanying drawings.

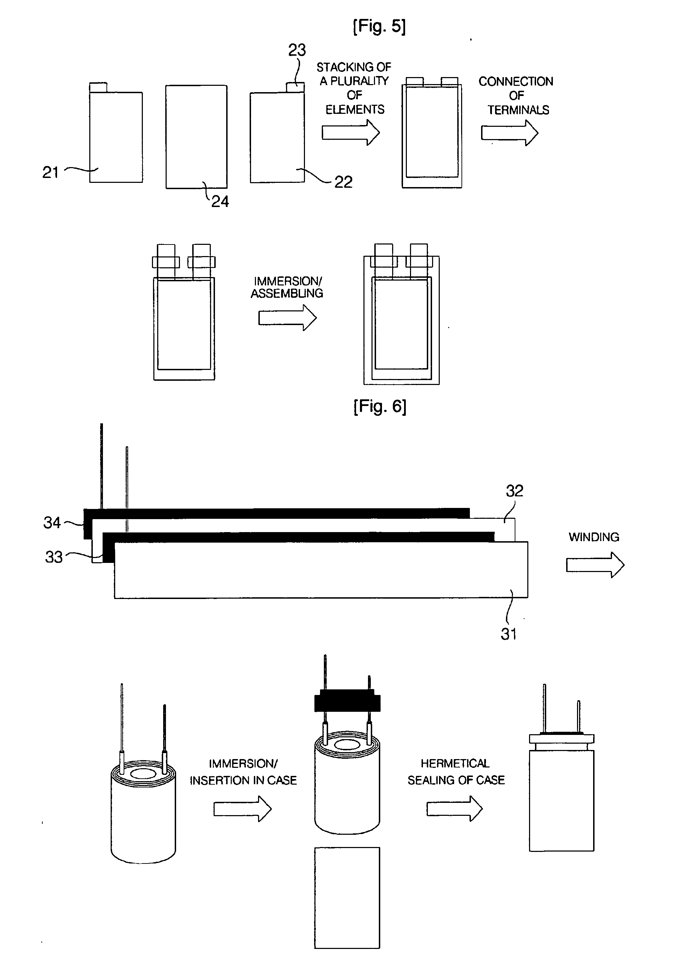

FIG. 4 is a circuit diagram of a hybrid battery according to an embodiment of the present invention and FIG. 5 is a view illustrating a structure of an electric double layer capacitor of FIG. 4.

Referring to FIG. 4, a hybrid battery 10 includes a primary battery 11 and an electric double layer capacitor 12 connected in parallel to the primary battery 11 and used as an auxiliary power source.

A commonly used primary battery may be used as the primary battery 11, but it is preferable to use a bobbin type lithium thionyl chloride battery that includes a lithium metal with a high energy density, a carbon electrode formed in a bobbin type, and inorganic electrolyte of thionyl chloride (SOCl₂).

The bobbin type lithium thionyl chloride battery can supply a current in a wide temperature range for a long time by having a high energy density and an excellent low temperature performance, and thus is suitable for a main power source for a pulse. On the other hand, since its power characteristic is not good, the energy density greatly decreases in a high current discharge. However, such a disadvantage can be complemented by the electric double layer capacitor 12.

Also, the electric double layer capacitor 12 may be a electric double layer capacitor, or may be a plurality of electric double layer capacitors connected in series or in parallel and represented equivalently.

The electric double layer capacitor 12 is preferably a winding type or a stacked type having a large region electrode structure where a large quantity of electric charges can transfer simultaneously to have a large capacitance C and a low self resistance R₁₂.

FIG. 5 is a view illustrating a structure of a stacked type electric double layer capacitor. Referring to FIG. 5, two activated carbon electrodes 21 and 22 with a metal collector 23 formed thereon and a separator 24 are alternately stacked, are immersed in electrolyte, and sealed hermetically in a case.

FIG. 6 is a view illustrating a structure of a winding type electric double layer capacitor. Referring to FIG. 6, activated carbon electrodes 33 and 34 with a metal collector coupled thereto and separators 31 and 32 interposed between the activated carbon electrodes 33 and 34 are alternately disposed, wound in a roll shape, immersed in electrolyte, and sealed hermetically in a case.

In the electric double layer capacitors illustrated in FIGS. 5 and 6, only ions can be conducted between the two electrodes immersed in electrolyte, and a porous separator are interposed therebetween for insulating and preventing a short circuit. Also, positive and negative electric charges distributed around interfaces between the electrodes and the electrolyte form a double layer when a voltage is applied. Here, since a large quantity of electric charges are accumulated at the activated carbon electrodes with a maximized surface area, the capacitance C₁₂ of the hybrid battery 10 is several hundreds of mF, very large when compared with the winding type condenser 3. Also, the electric double layer capacitor 12 has a self resistance R₁₂ of several tens of mΩ, and electric charges are absorbed on and detached from the electrode surface to perform charge and discharge therein, unlike the secondary battery 7. Therefore, the electric double layer capacitor 12 has a high reaction rate, and thus is suitable for a power source for a pulse requiring high charge/discharge rates, and satisfies various pulse conditions in a wide temperature range including -40°C.

While an active material layer with several hundreds of [µm] is formed at electrodes of the coin type electric double layer capacitor 5 according to the related are 2, an active material layer with a small thickness of 10-40 [µm] is formed at electrodes of the electric double layer capacitor 12. The electrode thickness of the electric double layer capacitor is intimately associated with a movement distance of electric charges in charge/discharge. In order to obtain a high power characteristic, the movement distance of electric charges should be minimized to increase the charge/discharge rates. When a thickness of an active material layer is more than 40 [µm], a resistance value increases. On the other hand, when the thickness thereof is less than 10 [µm], a distance between electrodes becomes too small and electric charges formed on an interface of electrodes are detached.

Also, the electric double layer capacitor 12 preferably includes 25-50 % by weight of conductive material based on the solid content of an electrode thereof. The electrodes including 25-50 % by weight of conductive material can have a high power characteristic when compared with an electric double layer capacitor including 25% or less conductive material. Also, as the relative content of activated carbon decreases, a micro-pores structure of electrodes becomes smaller, and deformation of the micro-pores structure due to repeated charge/discharge is minimized, greatly improving its cycle characteristic. However, when the content of the conductive material exceeds 50%, the capacitance characteristic decreases too much to correspond with the pulse characteristic. Therefore, the content of the conductive material preferably ranges from 25% to 50%.

Table 1 below shows specs of the hybrid battery 1 (hereinafter, referred to as a comparative example 1) of FIG. 1, the hybrid battery 4 (hereinafter, referred to as a comparative example 2) of FIG. 2, the hybrid battery 6 (hereinafter, referred to as a comparative example 3) of FIG. 3, and the hybrid battery 10 (hereinafter, referred to as an embodiment) of FIG. 4, at room temperature of 25°C. The primary battery used as a main power source in the comparative examples 1, 2, and 3, and an embodiment is a lithium thionyl chloride battery having a high energy density, a produce SB-D02 of the present applicant.

**Table 1**

| | Main power source | | | Auxiliary power source | |
|---|---|---|---|---|---|
| | Type | Capacitance[m A*Hr] | Resistance[Ω] | Type | Capacitance[F] |
| Comparative example 1 | Lithium primary battery | 19,000 | 2 | Winding type condenser | 0.001 |
| Comparative example 2 | | | | Coin type EDLC | 1 |
| Comparative example 3 | | | | Lithiym secondary battery | 160 |
| Embodiment | | | | Winding type EDLC | 1 |

Table 2 below shows the transient characteristic of the auxiliary power source by a constant current discharge using a current of 40 mA at a room temperature of 25°C and a low temperature of -40°C for 1 sec.

**Table 2**

| | | Constant current discharge characteristic (40 mA, 1 sec) | | | | | |
|---|---|---|---|---|---|---|---|
| | | Room temperature 25°C | | Low temperature - 40°C | | Increase rate | |
| | | Self resistance | capacitance | Self resistance | capacitance | Self resistance | capacitance |
| | | [Ω] | [F] | [Ω] | [F] | [%] | [%] |
| Comparative example 1 auxiliary power source | Winding type condenser | 0.18 | 0.0012 | 0.25 | 0.001 | 140.0 | 92.0 |
| Comparativ example 2 auxiliary power source | Coin type EDLC | 4.90 | 0.20 | 43.61 | 0.034 | 890.0 | 17.2 |
| Comparative example 3 auxiliary power source | Lithium secondary battery | 0.35 | 10.44 | 1.62 | 0.094 | 464.0 | 0.9 |
| Embodiment auxiliary power source | Winding type EDLC | 0.04 | 1.11 | 0.12 | 0.911 | 282.0 | 82.1 |

Referring to Table 1 and 2, the coin type EDLC that is the auxiliary power source of the comparative example 2 and the lithium secondary battery that is the auxiliary power source of the comparative example 3 have a very large difference between the spec characteristic of Table 1 and the transient characteristic of Table 2. This is because the power characteristics thereof are not good when compared with the others auxiliary power sources.

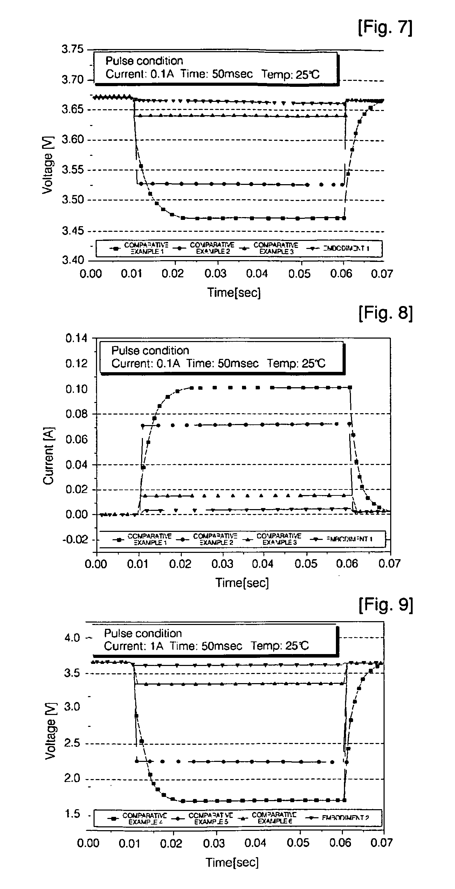

Table 3 below shows performances of the comparative examples and the embodiment according to the pulse characteristic and the temperature change. FIGS. 7 through 14 are graphs for comparing these performances of the comparative examples and the embodiment.

**Table 3**

| | | Pulse current [A] | Pulse time [msec] | Performing temperature[°C] | Voltage drop[V] | Current consumption [mA*sec] | Voltage characteristic of less than 3.0 V after pulse NG |
|---|---|---|---|---|---|---|---|
| Experiment 1 | Comparative example 1 | 0.1 | 50 | 25 | 0.20 | 4.99 | |
| | Comparative example 2 | 0.1 | 50 | 25 | 0.14 | 3.59 | |
| | Comparative example 3 | 0.1 | 50 | 25 | 0.03 | 0.75 | |
| | **Embodiment** | **0.1** | **50** | **25** | **0.01** | **0.17** | |
| Experiment 2 | Comparative example 1 | 1 | 50 | 25 | 2.00 | 49.95 | NG |
| | Comparative example 2 | 1 | 50 | 25 | 1.44 | 35.87 | NG |
| | Comparative example 3 | 1 | 50 | 25 | 0.30 | 7.51 | |
| | **Embodiment** | **1** | **50** | **25** | **0.08** | **1.73** | |
| Experiment 3 | Comparative example 1 | 0.1 | 50 | -40 | 0.60 | 4.85 | |
| | Comparative example 2 | 0.1 | 50 | -40 | 0.53 | 4.41 | |
| | Comparative example 3 | 0.1 | 50 | -40 | 0.15 | 1.25 | |
| | **Embodiment** | **0.1** | **50** | **-40** | **0.02** | **0.13** | |
| Experiment 4 | Comparative example 1 | 1 | 50 | -40 | 6.00 | 48.46 | NG |
| | Comparative example 2 | 1 | 50 | -40 | 5.30 | 44.08 | NG |
| | Comparative example 3 | 1 | 50 | -40 | 1.59 | 12.50 | NG |
| | **Embodiment** | **1** | **50** | **-40** | **0.17** | **1.29** | |

Experiment 1 is performed using a current of 0.1 A at a temperature of 25°C for 50 msec. Experiment 2 is performed using a current of 1 A at a temperature of 25°C for 50 msec. Experiment 3 is performed using a current of 0.1 A at a temperature of -40°C for 50 msec. Experiment 4 is performed using a current of 1 A at a temperature of -40°C for 50 msec.

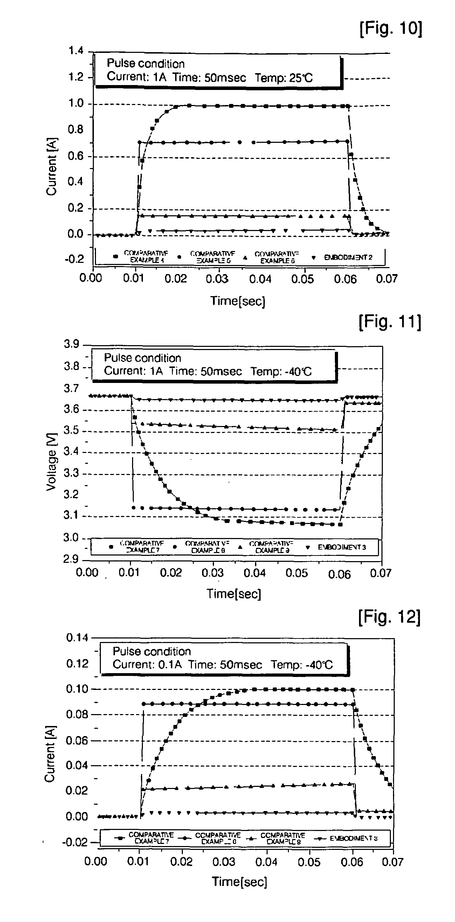

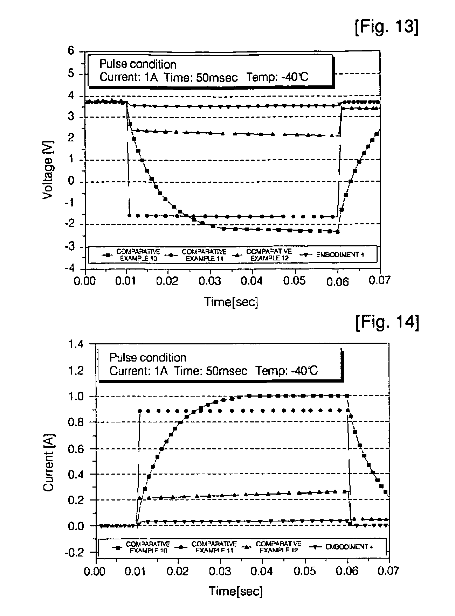

FIGS. 7 and 8 shows the results of Experiment 1, FIGS. 9 and 10 shows the results of Experiment 2, FIGS. 11 and 12 shows the results of Experiment 3, and FIGS. 13 and 14 shows the results of Experiment 4.

Referring to Table 3, the voltage drop and current consumption of the embodiment of the present invention are very small regardless of the current magnitude and the temperature change. In Table 3, NG means that the hybrid battery cannot be used as a power source when a terminal voltage is set to 3.67 V in opening the hybrid battery and the voltage drop occurs by 0.67 V or more in supply of pulse power.

## Claims

1. A hybrid battery (10) comprising a main power source (11) and an auxiliary power source (12) connected in parallel to the main power source (11), the hybrid battery (10) comprising a primary battery which is a lithium thionyl battery as the main power source (11) and an electric double layer capacitor including an activated carbon electrode as the auxiliary power source (12).

2. The hybrid battery (10) of claim 1, wherein the electric double layer capacitor is a stacked type.

3. The hybrid battery (10) of claim 1, wherein the electric double layer capacitor is a winding type.

4. The hybrid battery (10) of any one of claims 1 to 3, wherein the activated carbon electrode includes an active material layer with a small thickness of 10-40 µm.

5. The hybrid battery (10) of any one of claims 1 to 3, wherein the activated carbon electrode includes 25-50 % by weight of conductive material based on the total solid content.

6. The hybrid battery (10) of any one of claims 1 to 3, wherein the auxiliary power source (12) is a plurality of electric double layer capacitors coupled to each other.

## Patentansprüche

1. Hybridbatterie (10) mit einer Hauptleistungsquelle (11) und einer Hilfsleistungsquelle (12), die parallel zur Hauptleistungsquelle (11) geschaltet ist, wobei die Hybridbatterie (10) eine Primärbatterie, bei der es sich um eine Lithiumthionyl-Batterie handelt, als Hauptleistungsquelle (11) und einen elektrischen Doppelschichtkondensator, der eine Aktivkohleelektrode enthält, als Hilfsleistungsquelle (12) aufweist.

2. Hybridbatterie (10) nach Anspruch 1, wobei der elektrische Doppelschichtkondensator vom gestapelten Typ ist.

3. Hybridbatterie (10) nach Anspruch 1, wobei der elektrische Doppelschichtkondensator vom gewickelten Typ ist.

4. Hybridbatterie (10) nach einem der Ansprüche 1 bis 3, wobei die Aktivkohleelektrode eine Schicht aus aktivem Material mit einer geringen Dicke von 10 - 40 µm aufweist.

5. Hybridbatterie (10) nach einem der Ansprüche 1 bis 3, wobei die Aktivkohleelektrode, bezogen auf den gesamten Feststoffanteil, 25 - 50 Gew.-% leitfähiges Material aufweist.

6. Hybridbatterie (10) nach einem der Ansprüche 1 bis 3, wobei die Hilfsleistungsquelle (12) eine Mehrzahl von elektrischen Doppelschichtkondensatoren ist, die miteinander verkoppelt sind.

## Revendications

1. Batterie hybride (10) comprenant une source électrique principale (11) et une source électrique auxiliaire (12) connectée en parallèle à la source électrique principale (11), la batterie hybride (10) comprenant une batterie primaire qui est une batterie lithium-thionyle en tant que source électrique principale (11) et un condensateur à double couche électrique comprenant une électrode de charbon actif en tant que source électrique auxiliaire (12).

2. Batterie hybride (10) selon la revendication 1, dans laquelle le condensateur à double couche électrique est de type empilé.

3. Batterie hybride (10) selon la revendication 1, dans laquelle le condensateur à double couche électrique est de type à enroulement.

4. Batterie hybride (10) selon une quelconque des revendications 1 à 3, dans laquelle l'électrode de charbon actif comprend une couche de matériau actif avec une épaisseur réduite de 10 à 40 µm.

5. Batterie hybride (10) selon une quelconque des revendications 1 à 3, dans laquelle l'électrode de charbon actif comprend 25 à 50 % en poids de matériau conducteur en fonction de la teneur en matière solide totale.

6. Batterie hybride (10) selon une quelconque des revendications 1 à 3, dans laquelle la source électrique auxiliaire (12) est une pluralité de condensateurs à double couche électriques couplés les uns aux autres.
